# EUROPEAN PATENT SPECIFICATION

(11) **EP 2 684 712 B1**
(45) Date of publication and mention of the grant of the patent: **25.04.2018**
(21) Application number: 12768084.1
(22) Date of filing: 30.01.2012
(51) Int. Cl.: B60C 15/04, B29D 30/48, B60C 9/00, D07B 1/06, B60C 15/00

(54) **PNEUMATIC TIRE, AND METHOD FOR MANUFACTURING SAME**
LUFTREIFEN UND HERSTELLUNGSVERFAHREN DAFÜR
PNEUMATIQUE ET PROCÉDÉ DE FABRICATION DE CE PNEUMATIQUE

(30) Priority: 08.04.2011 JP 2011086076
(43) Date of publication of application: 15.01.2014
(73) Proprietor: Sumitomo Rubber Industries, Ltd., Kobe-shi, Hyogo 651-0072 (JP)
(72) Inventor: MIAO Dong, Kobe-shi, Hyogo 651-0072 (JP)
(74) Representative: Manitz Finsterwald Patentanwälte PartmbB
(86) International application number: PCT/JP2012/051998
(87) International publication number: WO 2012/137528

(56) References cited:
- JP-A- 2006 160 236
- JP-A- 2007 039 832
- JP-A- 2007 191 815
- JP-A- 2008 297 659
- US-A1- 2008 066 843
- US-A1- 2009 114 332

## Description

### TECHNICAL FIELD

The present invention relates to a pneumatic tire and a method for manufacturing the pneumatic tire having a bead structure comprising axially inner and outer core pieces, and a radially inner end part of a carcass ply is held therebetween. The features of the preamble of the independent apparatus claim are known from us 2008/066843 A1. Related technology is known from JP 2007039832 A.

### BACKGROUND OF THE INVENTION

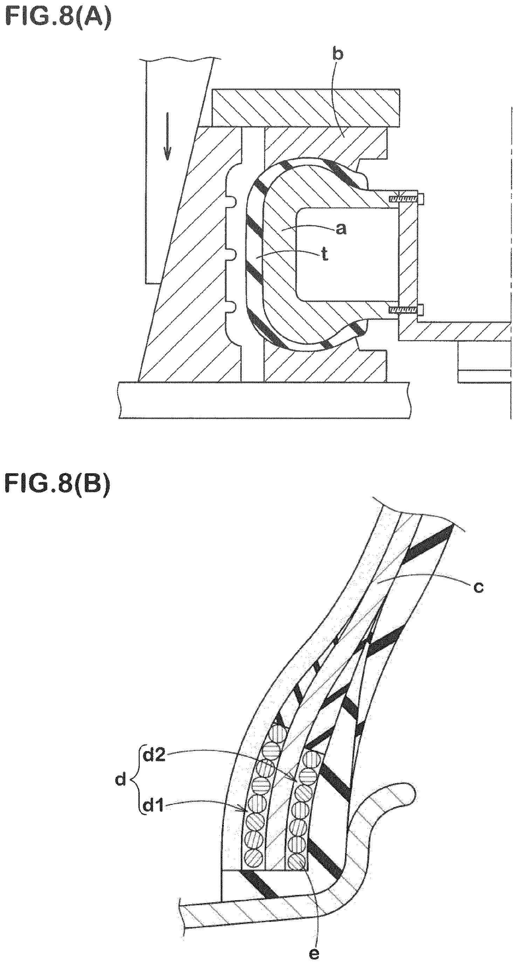

In recent years, to improve accuracy of tire forming, the following making process (hereinafter called "inner molding process ") as shown in Fig. 8(A) is suggested:
using a rigid inner mold (a) comprising an outer surface shape corresponding to a tire inner surface shape of a vulcanized tire, and adhering tire structures member such as inner liner, carcass ply, bead core, belt ply, sidewall rubber, tread rubber and the like sequentially on this rigid inner mold (a) to form a unvulcanized tire (t)
putting the unvulcanized tire (t) with the rigid inner mold (a) into a vulcanizing mold (b), and
vulcanizing the tire between the rigid inner mold (a) and the vulcanizing mold (b), which is an outer mold.

The inner molding process has difficulty terminating both end parts of the carcass ply around the bead core like in a traditional tire.
Therefore, the following Patent Document 1 shown in Fig. 8(B) discloses a structure of dividing the bead core (d) into axially inner and outer core pieces (d1, d2) and compressing between the axially inner and outer core pieces d1, d2 without being turned-up the both end of the carcass ply (c). Each of the core pieces d1, d2 is formed as a thin spiral-wound body comprising a single bead wire (e) wound from a radially inner side to a radially outer side in an overlapping manner in the shape of spiral. This improves a radial height of the bead core (d) in the limited winding number of the bead wire (e) to a maximum extent, increases an area of contact with the carcass ply, and ensures locking on the both end parts of the carcass ply.

However, in case of such a bead structure, each of the core pieces d1, d2 is axially thin. Therefore, at the time of a rim mounting, there arises a localized deformation when twisting the bead portion with a lever, and this becomes a plastic deformation; accordingly, this deformation will not return to its original shape after the rim mouthing.

### CONVENTIONAL ART DOCUMET

### PATENT DOCUMENT

Patent Document 1: Japanese unexamined Patent Application Publication No. 2006-160236

### GENERAL DESCRIPTION OF THE INVENTION

### PROBLEMS TO BE SOLVED BY THE INVENTION

Therefore, the present invention is based on employing the predetermined twisted structure of using plural of steel strands as substitute for a single wire as the bead wire. And the present invention aims to provide a pneumatic tire and a method for manufacturing the pneumatic tire while keeping corrosion resistance and air-leak resistance and providing in the bead wire with an appropriate flexibility so as to prevent a core deformation at the time of rim mounting.

### MEANS FOR SOLVING THE PROBLEM

To solve the above-mentioned problems, the invention as set forth in claim 1 is a pneumatic ti re comprising a carcass comprising a carcass ply extending from a tread portion through a sidewall portion to a bead core of a bead portion. The bead core comprises axially inner and outer core pieces, and a radially inner end part of the carcass ply is held between the axially inner and outer core pieces without being turned-up around the bead core. Each of the inner and outer core pieces are composed of a spiral-wound body in which a bead wire is wound from the radially-inwardly to the height of over the radially outer end of a rim flange in an overlapping manner in the shape of spiral. The bead wire comprises a core part made of not less than two core strands twisted together and a sheath part made of not less than three sheath strands twisted together around the core part, the diameter of the core strands is the same as the diameter of the sheath strands, and the core strands and/or sheath strands include an embossed strand that is embossed in a wave shape before twisting. The twisting direction and the twisting pitch Pc of the core strands are the same as a twisting direction and twisting pitch Ps of the sheath strands.

The invention as set forth in claim 3 is a method for manufacturing a pneumatic tire comprising a carcass comprising a carcass ply extending from a tread portion through a sidewall portion to a bead core of a bead portion. By use of rigid inner mold provided on an outer surface with the tire forming surface forming a cavity surface of the pneumatic tire, the method comprises a green tire forming process to form a raw cover by adhering sequentially unvulcanized tire component members including the bead core and the carcass ply on the tire forming surface. The green tire forming process comprises: a first core pieces process to form an axially inner core piece on the tire forming surface by spirally winding and adhering a rubber lining bead wire covered with unvulcanized rubber from the radially inward to radially outward in an overlapping manner in the shape of spiral, a carcass forming process to have a step of adhering the radially inner end part of the carcass ply on the axially outside of the axially inner core piece, and a second core pieces process to form an axially outer core piece on the axially outside of the radially inner end part of the carcass ply by spirally winding and adhering the rubber lining bead wire from the radially inward to radially outward in an overlapping manner in the shape of spiral. The bead wire comprises a core part made of not less than two core strands twisted together and a sheath part made of not less than three sheath strands twisted together around the core part. The core strands and/or sheath strands include an embossed strand that is embossed in a wave shape before twisting. The twisting direction and twisting pitch Pc of the core strand are the same as the twisting direction and twisting pitch Ps of the sheath strands.

Each of the inventions as set forth in claim 2 and 4; the bead wire comprises the sheath strands wound around the core part after twisting the core strands.

### EFFECTS OF THE INVENTION

As above stated, in the bead structure of the present invention, the radially inner end part of the carcass ply is held between the axially inner and outer core pieces. Each of the core pieces is made of a spiral-wound body which is made of a bead wire spirally wound and overlapped to the height of over a radially outer end of a rim flange. Therefore, this improves the area of contact of core pieces with the carcass ply and exerts the securing force sufficiently, and prevents a blowout of the carcass ply.

For the bead wire, a twisted structure is employed. The twisted structure comprises a core part made by twisting the core strands and a sheath part made by winding the sheath strands around the core part. The twisting direction and a twisting pitch Pc of the core strands are the same as a twisting direction and a twisting pitch Ps of the above-mentioned sheath strands. This provides the appropriate flexibility to the bead wire so as to prevent a core deformation at the time of rim mounting.

Furthermore, the core strands and the sheath strands have the same twisting direction and the twisting pitch one another. The strand can be twisted the most compatibly as well as a so-called bundle twisted structure where plural of strands are tied together and twisted. This helps to form less spaces in the wire, to keep a deformation in the same direction as a variation of the cross-sectional shape of the wire low, to improve the connecting power with the rim, and to keep the steering stability. When an ordinal layer twisted structure that at least one of the twisting direction and twisting pitch are differs, there is a space where the sheath strand may drop in the core part, the connecting power with the rim decreases, and this impacts negatively on steering stability.

In the bundle twisted structure, locations of the strand on the wire change at random, and the cross-sectional shape is unequal in the circumferential direction. Therefore, in the circumferential direction, this structure is liable to have differing strengths of the connecting pressure with the rim. This weak connecting pressure area causes a drop of the air-leak resistance such that the fill up air is easier to leak. However, the above-mentioned twisted structure has a cross-sectional shape stabile in the circumferential direction without changing the locations of the strand, and this helps to keep the air-leak resistance high.

Moreover, the above-mentioned bead wire comprising an embossed strand can improve rubber penetrating into the wire, can prevent corrosion, and can improve the durability of the bead wire, furthermore the durability of the tire. Meanwhile, the bundle twisted structure with an embossed strand improves the rubber penetrating to some extent, but the locations of the strand changes randomly. The embossed strand forms interspaces unstably, thereby decreasing the rubber penetrating. However, in the above-mentioned twisted structure, the locations of the strand do not change, and the interspaces are formed stably. The twisted structure has more enhancing effects in rubber penetrating than the bundle twisted structure.

The bundle twisted structure has a strong point of keeping the steering stability while improving the connecting power with the rim and a weak point of having less air-leak resistance and rubber penetrating. The bead wire having the twisted structure can exert the strong point and redeems the weak point of the bundle twisted structure. In the pneumatic tire formed in the inner molding process, this suppresses the bead deformation at the time of rim mounting without deteriorations of the blowout of the carcass ply, the connecting power with rim, the air-leak resistance and the rubber penetrating.

### BRIEF EXPLANATION OF THE DRAWING

[Fig. 1] Fig. 1 is a cross-sectional view of a pneumatic tire showing an embodiment of the present invention.
[Fig. 2] Fig. 2 is a cross-sectional view of its bead portion enlargedly.
[Fig. 3] Fig. 3 is a cross-sectional view of inside structure of a bead wire.
[Fig. 4] Fig. 4 is a side view of an embossed strand.
[Fig. 5] Fig. 5 is a perspective view explaining a twisting method of the bead wire on a conceptual basis.
[Fig. 6] Fig. 6 is a cross-sectional view showing a green tire forming process.
[Figs. 7] Figs. 7(A) to (C) are cross-sectional views showing a first core piece process, a carcass forming process and a second core pi eces process.
[Figs. 8] Fig. 8 (A) is a cross-sectional view explaining an inner molding process, Fig. 8 (B) is a cross-sectional view showing a bead structure of a tire which the inner molding process is applied to.

### BEST MODE FOR CARRYING OUT THE INVENTION

Hereinafter, preferred embodiments of the present invention will be particularly described.

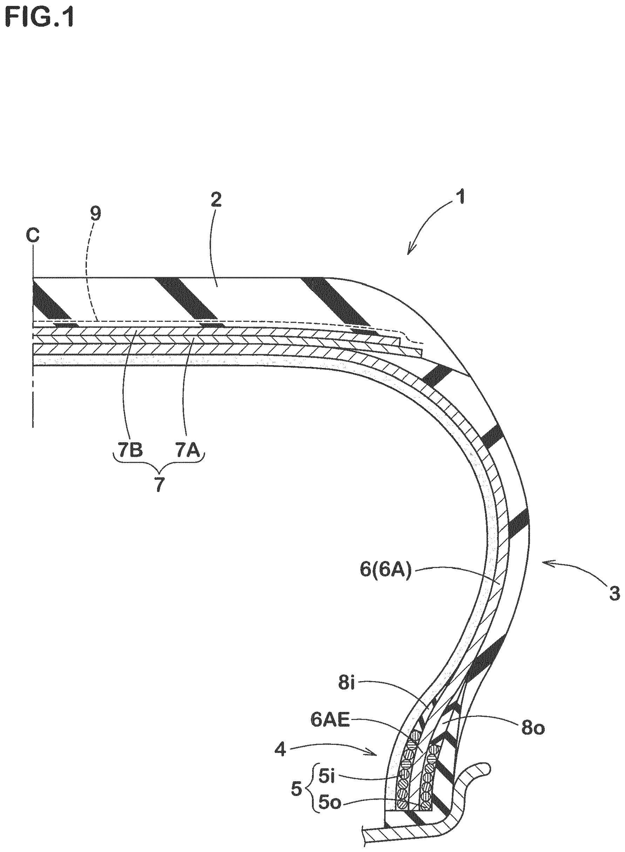

As shown in Fig. 1, a pneumatic tire 1 of the present embodiment comprises a carcass 6 extending from a tread portion 2 through a sidewall portion 3 to a bead core 5 of a bead portion 4. In the present embodiment, a belt layer 7 is provided on a radially outside of the carcass 6 and on an inside of the tread portion 2.

The belt layer 7 comprises at not less than one, two belt plies 7A, 7B in the present embodiment, having belt cords inclined at an angle of 10 to 35 degrees with respect to the tire circumferential direction. In the belt layer 7, the belt cords intersect one another between the ply so as to improve the belt rigidity and reinforce strongly a substantially overall width of the tread portion 2 with hoop effect. For the belt cord, a steel cord is employed in this embodiment, but high modulus organic fiber cord such as polyethylene naphthalate (PEN), polyethylene terephthalate (PET), aromatic polyamide and the like can be employed as appropriate.

A band layer 9 may be provided on the radial direction outside. The band layer 9 has organic fiber band cords such as nylon and the like wound spi rally at an angle of not more than 5 degrees with respect to the circumferential direction to improve the high-speed durability and the like. For this band layer 9, a pair of edge band ply covering only the axially outer end of the above-mentioned belt layer 7 and a full band ply covering the substantially-overall width of the belt layer 7 can be arbitrarily employed; and in the present embodiment, employed is a single full band ply.

The carcass 6 comprises not less than one carcass ply 6A having organic fiber carcass cords arranged in radial arrangement, one carcass ply 6A is applied in this embodiment. This carcass ply 6A forms a toroidal shape extending between the bead portions 4, 4. The both radially end parts 6AE of the carcass ply 6A terminates in the bead core 5 without being turned-up around the bead core 5. In concrete terms, the bead core 5 is made of axially inner and outer core pieces 5i, 5o, and each of the radially end parts 6AE of the carcass ply 6A is held between these axially inner and outer core pieces 5i, 5o.

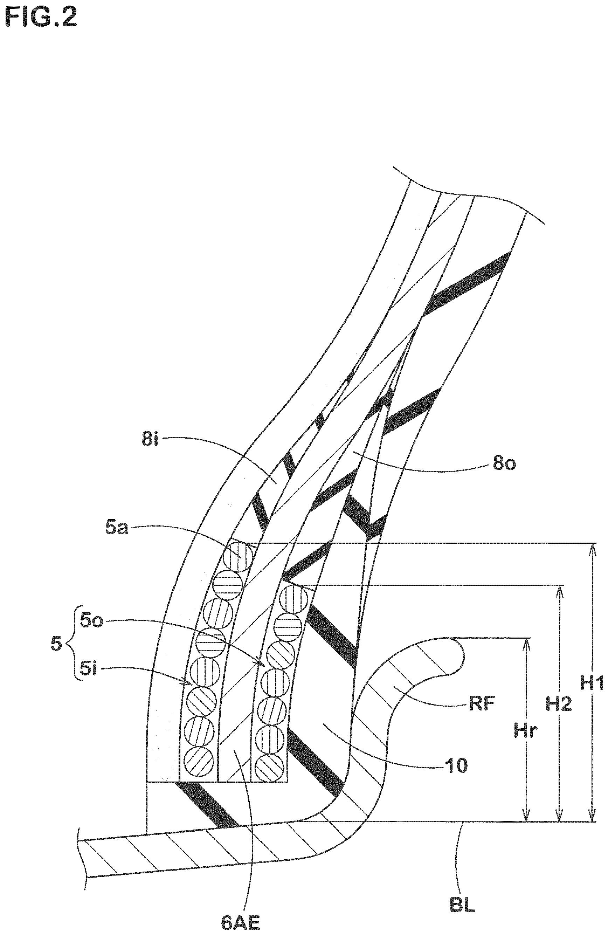

Each of the axially inner and outer core pieces 5i, 5o is, as shown in Fig. 2, composed of a thin spiral-wound body in which the bead wire 5a is wound from the radially-inwardly to the height over a radially outer end of a rim flange RF in an overlapping manner in the shape of spiral. That is to say, radially heights H1, H2 measured from a bead base line BL to the radially outer surface of the core pieces 5i, 5o are larger than a radially height Hr measured from the bead base line BL to the outer end of the rim flange RF. In the core pieces 5i, 5o of the present embodiment, the bead wire 5a is overlapped on one line in the tire axial direction. This improves the radially heights H1, H2 of the core pieces 5i, 5o in the limited number of winding of the bead wire 5a to a maximum extent, and improves the area of contact with the carcass ply 6A, and keeps the securing power of the both end parts 6AE of the carcass ply 6A.

To prevent a core break at the time of tire deformation, this embodiment limits the winding number No of the bead wire 5a in the axially outer core piece 5o to have less than the winding number Ni of the axially inner core piece 5i. The bead portion 4 comprises the inner and outer bead apex rubber 8i, 8o extending from the axially inner and outer core pieces 5i, 5o toward respective radially outward tapered shape so as to reinforce a portion between the bead portion 4 and the sidewall portion 3. And, a symbol 10 in the drawings means a chafer rubber for preventing rim shifting.

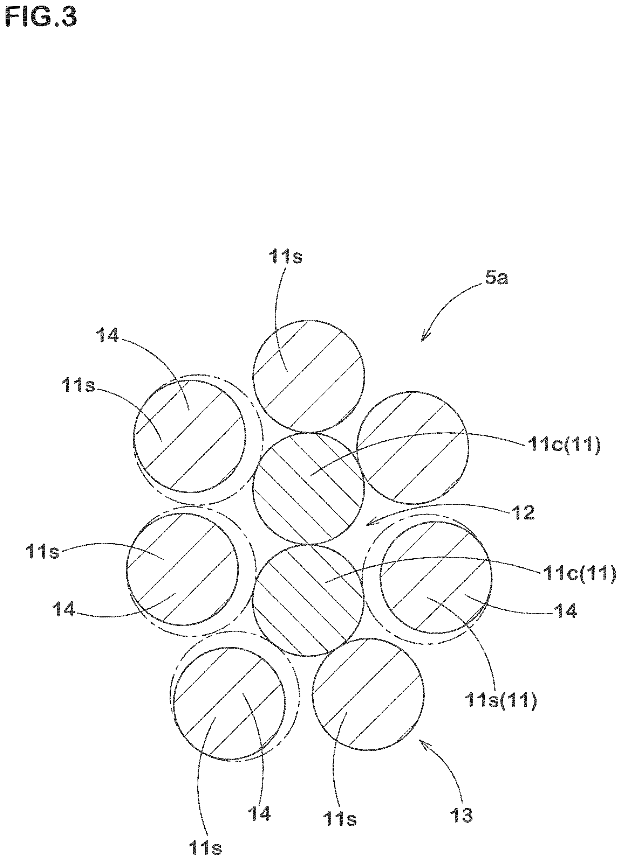

The bead wire 5a is formed by twisting plural of steel strands 11 having the same diameter to prevent the core deformation at the time of rim mounting. In concrete terms, the bead wire 5a comprises a core part 12 made of not less than two core strands 11c twisted together, and a sheath part 13 made of not less than three sheath strands 11s twisted together around the core part 12 as shown in Fig. 3. The twisting direction and the twisting pitch Pc of the core strands 11c are the same as a twisting direction and twisting pitch Ps of the sheath strands 11s. Fig. 3 shows an embodiment that the bead wire 5a comprises two core strands 11c and seven sheath strands 11s.

In this twisted structure of the present embodiment, since the twisting direction and the twisting pitch Pc of the core strands 11c are the same as the twisting direction and the twisting pitch Ps of the sheath strands 11s, plural of strands 11 are arranged the most compactly and are twisted in the retaining of this arrangement. That is to say, the arrangement of the strands 11 in the wire section is the same on arbitrary longitudinal positions of the bead wire 5a, and the same arrangement is maintained around the wire center.

In case of the bundle twisted structure, the strands locate most compactly, but the position of the strands in the wire changes randomly thereby varying the arrangement of the strands in the longitudinal direction. Therefore, its cross sectional shape is non-uniform in the circumferential direction and it is liable to lack in uniformity of the connecting pressure with the rim in the circumferential direction. It causes a decrease of the air-leak resistance such as a fill up air leaking from the weak point of connecting pressure. However in the twisted structure of the present embodiment, the strand positions do not change, and the cross sectional shape is stable in the circumferential direction. Therefore, the air-leak resistance can be kept high.

In the case of the ordinarily layer twisted structure where at least one of the twisting direction and twisting pitch differs, the core part and the sheath part are distributed. Therefore, there is a space where the sheath strand drops into the core part, and a deformation in the deforming direction of the cross sectional shape of the wire is liable to occur. This negatively affects on the steering stability such as a decrease of the connecting power with the rim. However, the twisted structure of the present embodiment has a compact strand arrangement and forms the above-mentioned space as little as the bundle twisted structure; therefore, it increases the connecting power with the rim and can keep the steering stability.

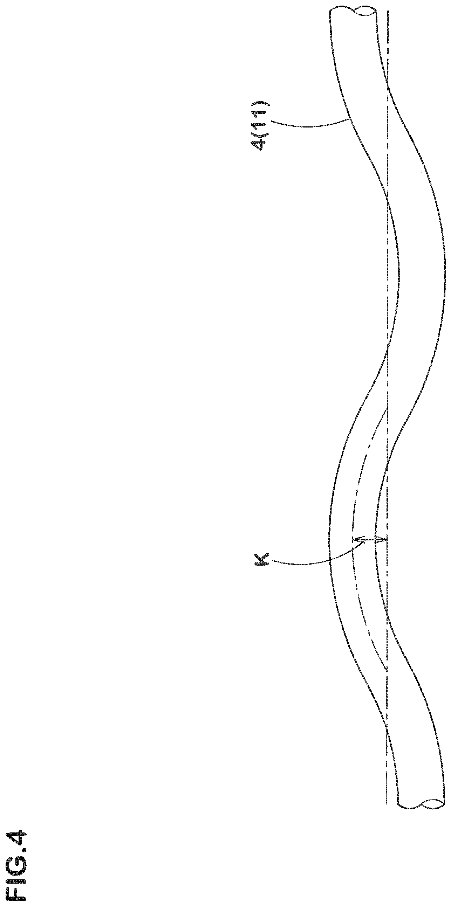

The twisted structure of the present embodiment has the compact strand arrangement; therefore, the twisted structure has less rubber penetrating into the wire. However, in the present embodiment, as shown in Fig. 4, the core strands 11c and/or sheath strands 11s includes an embossed strand 14 embossed in spirally or wavy shape before twisting. Thus, the embossed strand 14 helps to improve the rubber penetrating into the wire, to reduce the development of rust, and to improve the bead wire durability and tire durability. Meanwhile, also in the case of using the embossed strand in the bundle twisted structure, the rubber penetration can be improved to a certain degree, but the positions of the strands randomly change; therefore, the formation of the interspace is precarious, and the rubber penetrating decreases. However, in the case that the above-mentioned twisted structure, the positions of the strands do not change; therefore, the interspace is stably-formed, and the rubber penetrating is higher than that of the bundle twisted structure.

In this way, the above-mentioned bead wire 5a has the advantages of the bundle twisted structure of improving the connecting power with the rim so as to keep the steering stability, and can cover disadvantages of the bundle twisted structure such as less air-leak resistance and less rubber penetrating. In the pneumatic tire made with an inner molding, the bead deformation at the time of rim mounting can be reduced without deterioration of the blowout of carcass ply, connecting power with rim, air-leak resistance nor rubber penetrating.

A dimension K of embossing by the above-mentioned embossed strand 14 (shown in Fig. 4) is preferably in a range of from 0.02 to 0.25 mm. when it is less than 0.02 mm, the rubber penetrating is not enough. when it is more than 0.25 mm, the dimension is unstable, and it has negative effects on the connecting power with the rim and the air-leak resistance.

A diameter of the strand 11 is not particularly limited, but from the aspect of the requi red strength of the bead wi re, it is preferably in a range of from 0.175 to 0.45 mm for a passenger car tire. The number of the core strand 11c and the number of the sheath strand 11s are also not particularly limited, from the aspect of the required strength of the bead wire, the number of the core strand 11c is preferably in a range of from 2 to 5 for a passenger car tire, the number of the sheath strand 11s is preferably larger than the number of the core strand 11c and in a range of from 3 to 12.

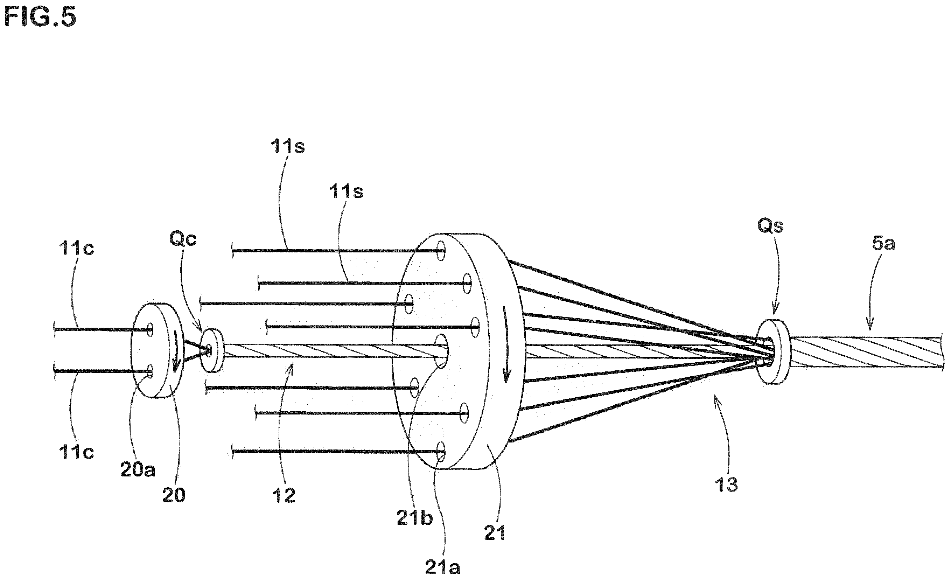

As shown conceptually in Fig. 5, to achieve the above-mentioned compact strand arrangement, it is preferably to form a core part 12 by twisting together the core strands 11c, and after that the sheath strands 11s are preferably wound around the core part 12. A symbol 20 in the drawing means a first twisting die provided around the center line with guide holes 20a to give pass through each core strand 11c. The first twisting die 20 is rotated around the center line so as to twist together the core strands 11c for forming the core part 12. A symbol 21 means a second twisting die provided around the center line with guide holes 21a where each sheath strand 11s pass through. The second twisting die 21 is provided in its center with an expansion insertion hole 21b where the above-mentioned core part 12 is inserted. This rotation of the second twisting die 21 around center line forms the sheath part 13 by winding the sheath strands 11s around the core part 12. A symbol Qs means a converging position of the sheath strands 11s and is located more forward than a converging position Qc of the core strands 11c. By adjustment of rotation numbers of the first twisting die 20 and the second twisting die 21, the bead wires 5a can be formed so as to have equal twisting pitches Pc, Ps. Since the converging position Qc differs from the converging position Qs, a bead wire 5a can be obtained, where position changes are more surely prevented between the core strand 11c and the sheath strand 11s.

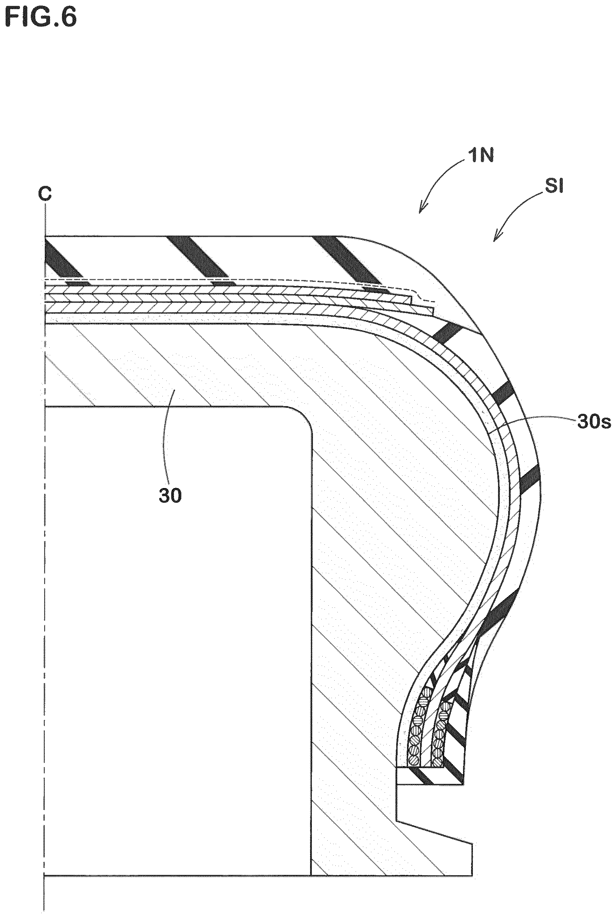

The following is a method for manufacturing the above-mentioned pneumatic tire 1. As shown roughly in Fig. 6, this method for manufacturing uses a rigid inner mold 30 provided on an outer surface with the tire forming surface 30s to form a cavity surface of the pneumatic tire 1 and comprises
a green tire forming process S1 to form a raw cover 1N by adhering sequentially unvulcanized tire component members on a tire forming surface 30s; and
a vulcanizing provide to vulcanize the raw cover 1N with the rigid inner mold 30 in a vulcanizing mold (not shown)

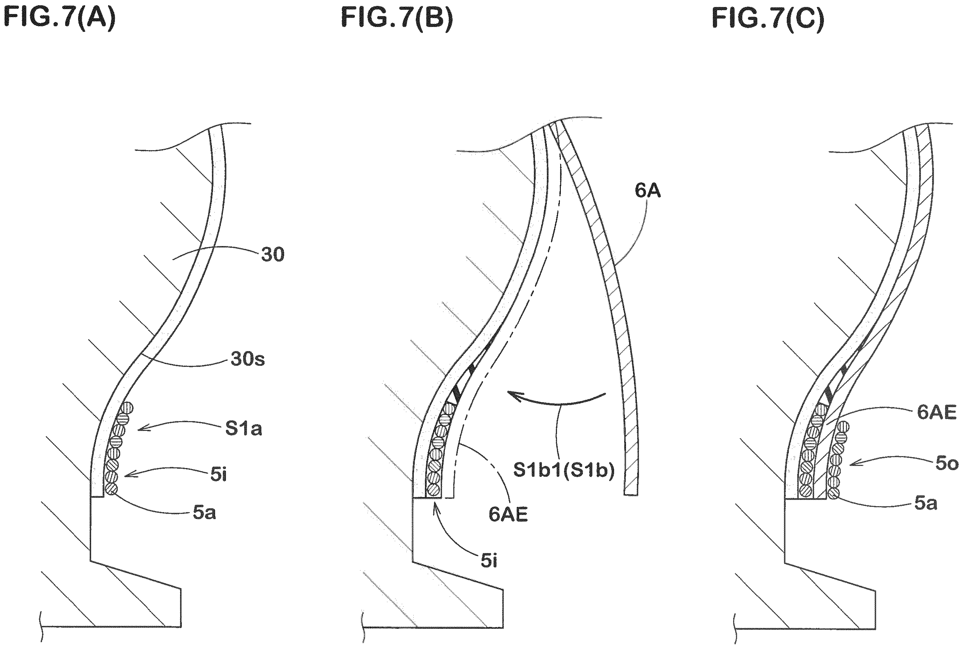

As shown in Figs. 7 (A) to (C), the green tire forming process S1 comprises
(1) a first core pieces process S1 to form an axially inner core piece 5i on the tire forming surface by spirally winding and adhering a rubber lining bead wire 5a covered with unvulcanized rubber from the radially inward to radially outward in an overlapping manner in the shape of spiral,
(2) a carcass forming process S1b to have a step S1b1 of adhering the radially inner end part 6AE of the carcass ply 6A on the axially outside of the axially inner core piece 5i, and
(3) a second core pieces process S1c to form an axially outer core piece 5o on the axially outside of the radially inner end part 6AE of the carcass ply 6A by spi rally winding and adhering the rubber lining bead wire 5a from the radially inward to radially outward in an overlapping manner in the shape of spiral.

The bead wire 5a is formed with the above-mentioned twisted structure. As described above, the core strands 11c has the same twisting direction and twisting pitch Pc as the twisting direction and twisting pitch Ps of the sheath strands 11s.

Although the especially preferred embodiments of the invention have been described in detail, needless to say, the invention is not limited to the above-mentioned concrete embodiments shown in drawings, and various modifications can be made.

### EXAMPLES

To ascertain the efficacy of the present invention, a pneumatic tire (195/65R15) was made with an inner molding process by use of a bead wire having a structure shown in Fig. 1 and having a specification shown in Table 1. Each test tire was tested on deformation performance of a bead core at a time of mounting on a rim, air-leak resistance of the bead core, corrosion resistance of the bead wire, and steering stability; and the results were compared. Traditional Example uses a single wire for the bead wire. An embossed strand was employed for a sheath part. The twisting direction of the core strands and the twisting direction of the sheath strands were the same in both of Comparative Example and Example.

Twisted structures shown in Table 1 are as follows:
1×m structure: Bundle twisted structure with m numbers of the strand;
m+n structure: Layer twisted structure with m numbers of the core strand and n numbers of sheath strand; and
m/n structure: Twisted structure of the present embodiment with the m numbers of the core strand and the n numbers of the sheath strands which have the same in twisting direction and twisting pitch.

Each test tire had substantially the same specification except for the specification of the bead wire shown in Table 1. Primary common specifications were as follows:

### <Carcass>

Number of carcass plies: 1
Material of carcass cord: polyester
Angle of carcass cord: 88 degrees (with respect to tire equator)

### <Belt layer>

Number of belt plies: 2
Material of belt cord: steel
Angle of belt cord: +28 degrees, -28 degrees (with respect to tire equator)

### <Bead core>

winding number Ni of bead wires in axially inner core piece: 8
winding number No of bead wires in axially outer core piece: 11
Rubber hardness of bead apex rubber: 80 (durometer A hardness)

### <Cord strength>

Based on the tension test of JIS (Japanese industrial Standards) G3510 of "Testing methods for steel tire cords", maximum tension load of cord breaking was measured. Clamping distance was 700 mm, and tension rate was 50 mm/min.

### <Bending rigidity>

By use of Taber V-5 Stiffness Tester, Type 150-D, manufactured by TABER (USA), a cord extending 5 cm from a fixed end is exerted pressure at its tip. Bending rigidity was defined as a value of bending moment (gf · cm) at the time that the tip aperture angle θ (theta) was at 15 degrees.

### <Twisting accumulation>

visually evaluating a coming-off of the strand in a time of rubber lining to the cord.

### (1) Deformation blowout of bead core:

visually checking whether the bead core never recovered from a deformation at the portion the most twisted by a lever after dismounting a ti re from a rim by use of a commercially available tire changer.

### (2) Air-leak resistance of bead core:

The tire was mounted on a rim (15 x 6 JJ) and inflated to an internal pressure of 200 kPa, and remained untouched for 30 days. Evaluation was defined as a decreasing rate of the internal pressure using indices with the traditional tire being 100. The larger the numeric value was, the more favorable the air-leak resistance was.

### (3) Corrosion resistance:

The tire was remained untouched for 21 days in a moist heat oven at a temperature of 70 degrees C and 95% relative humidity and conducted an endurance test with a drum test run machine. The endurance test was conducted under a condition of the tire internal pressure of 190 kPa, load of 6.96 kN, speed of 80 km/H, running for 375 hours in a row. After the run, the tire was taken down and checked rust occurred in the bead wire. Evaluation was displayed on a scale of one to five. The larger the numeric value was, the more favorable the corrosion resistance was.

### (4) Steering stability:

Each test tire was mounted on a rim (15 x 6 JJ) under an internal pressure (200 kPa) for all wheels of a vehicle (2000 cc). Straight running performance, cornering stability, braking behavior and the like were tested by a professional driver when the vehicle ran on an asphalted road surface of a tire test course in dry condition. Evaluation was performed in the driver's feeling test and defined using indices with a traditional tire being 100. The larger the numeric values, the more favorable the steering stability was.

**[Table 1]**

| | Traditional Ex. | Comparative Ex.1 | Comparative Ex. 2 | Ex. 1 | Comparative Ex. 3 | Comparative Ex. 4 | Ex. 2 |
|---|---|---|---|---|---|---|---|
| <Bead wire> | | | | | | | |
| • Twisted structure | Single wire | 1x9 | 2+7 | 2/7 | 1x11 | 3+8 | 3/8 |
| • Strand diameter <mm> | 1.20 | 0.38 | 0.37 | 0.37 | 0.38 | 0.37 | 0.37 |
| • Numbers of core strands | 1 | ----- | 2 | 2 | ----- | 3 | 3 |
| • Numbers of sheath strands | 0 | ----- | 7 | 7 | ----- | 8 | 8 |
| • Numbers of embossed strands | ----- | 4 | 4 | 4 | 4 | 4 | 4 |
| Embossing type | ----- | Wavy | Wavy | Wavy | Wavy | Wavy | Wavy |
| Embossing dimension K<mm> | ----- | 0.17 | 0.17 | 0.17 | 0.17 | 0.17 | 0.17 |
| Embossing pitch <mm> | ----- | 4.71 | 4.71 | 4.71 | 4.71 | 4.71 | 4.71 |
| • Twisting pitch Pc of core <mm> | ----- | 26 | 10 | 26 | 26 | 10 | 26 |
| • Twisting pitch Ps of sheath <mm> | ----- | 26 | 20 | 26 | 26 | 20 | 26 |
| Cord strength <N> | 1206 | 3050 | 3050 | 3050 | 3725 | 3725 | 3725 |
| Bending rigidity <gf·cm> | More than 500 | 256 | 231 | 231 | 282 | 282 | 282 |
| Twisting accumulation | ----- | Generated | None | None | Generated | None | None |
| | | | | | | | |
| Deformation of bead core | Generated | None | None | None | None | None | None |
| Air-leak resistance of bead core | 100 | 90 | 100 | 100 | 90 | 100 | 100 |
| Corrosion resistance of bead wire | 4.5 | 2.5 | 4.5 | 4.5 | 2.0 | 4.5 | 4.5 |
| Steering stability | 100 | 100 | 80 | 100 | 100 | 80 | 100 |

From the result shown in Table, the cord of the embodiment was confirmed that the bead deformation at the time of mounting on the rim could be reduced without reductions of the connecting power with the rim, air-leak resistance, nor rubber penetrating.

### EXPLANATION OF THE REFERENCE

2 Tread portion
3 sidewall portion
4 Bead portion
5 Bead core
5a Bead wire
5i Axially inner core piece
5o Axially outer core piece
6 Carcass
6A Carcass ply
11 strand
11c core strand
11s sheath strand
12 Core part
13 Sheath part
14 Embossed strand
S1 Green tire forming process
S1a First core piece process
S1b Carcass forming process
S1c Second core piece process

## Claims

1. A pneumatic tire (1) comprising a carcass (6) comprising a carcass ply (6A) extending from a tread portion (2) through a sidewall portion (3) to a bead core (5) of a bead portion (4), wherein
said bead core (5) comprises axially inner and outer core pieces (5i,5o), and a radially inner end part (6AE) of the carcass ply (6A) is held between the axially inner and outer core pieces (5i,5o) without being turned-up around the bead core (5);
each of said inner and outer core pieces (5i,5o) are composed of a spiral-wound body in which a bead wire (5a) is wound from the radially-inwardly to the height of over the radially outer end of a rim flange (RF) in an overlapping manner in the shape of spiral;
said bead wire (5a) comprises a core part (12) made of not less than two core strands (11c) twisted together and a sheath part (13) made of not less than three sheath strands (11s) twisted together around said core part (12), the diameter of the core strands (11c) is the same as the diameter of the sheath strands (11s),
**characterized in that**
said core strands (11c) and/or sheath strands (11s) include an embossed strand (14) that is embossed in a wave shape before twi sti ng;
the twisting direction and the twisting pitch Pc of said core strands (1c1) are the same as a twisting direction and twisting pi tch Ps of the sheath strands (11s).

2. A method for manufacturing a pneumatic tire (1) comprising a carcass (6) comprising a carcass ply (6A) extending from a tread portion (2) through a sidewall portion (3) to a bead core (5) of a bead portion (4), wherein
by use of rigid inner mold (30) provided on an outer surface with the tire forming surface (30s) forming a cavity surface of the pneumatic tire (1), the method comprises a green tire forming process to form a raw cover (1N) by adhering sequentially unvulcanized tire component members including the bead core (5) and the carcass ply (6A) on the tire forming surface (30s);
the green tire forming process comprises
a first core pieces process (S1a) to form an axially inner core piece (5i) on said tire forming surface (30s) by spirally winding and adhering a rubber lining bead wire (5a) covered with unvulcanized rubber from the radially inward to radially outward in an overlapping manner in the shape of spiral,
a carcass forming process (S1b) to have a step of adhering the radially inner end part (6AE) of the carcass ply (6A) on the axially outside of said axially inner core piece (5i), and
a second core pieces process (S1c) to form an axially outer core piece (5o) on the axially outside of the radially inner end part (6AE) of said carcass ply (6A) by spirally winding and adhering said rubber lining bead wire (5a) from the radially inward to radially outward in an overlapping manner in the shape of spiral; and
said bead wire (5a) comprises a core part (12) made of not less than two core strands (11c) twisted together and a sheath part (13) made of not less than three sheath strands (11s) twisted together around said core part (12);
said core strands (11c) and/or sheath strands (11s) include an embossed strand (14) that is embossed in a wave shape before twi sting; and
the twisting direction and twisting pitch Pc of said core strand (11c) are the same as the twisting direction and twisting pitch Ps of the sheath strands (11s).

3. The method for manufacturing the pneumatic tire as set forth in claim 2, wherein said bead wire (5a) comprises the sheath strands (11s) wound around the core part (12) after twisting said core strands (11c).

## Patentansprüche

1. Luftreifen (1), der eine Karkasse (6) mit einer Karkasslage (6A) umfasst, die sich von einem Laufflächenabschnitt (2) durch einen Seitenwandabschnitt (3) zu einem Wulstkern (5) eines Wulstabschnitts (4) erstreckt, wobei
der Wulstkern (5) axial innere und äußere Kernstücke (5i, 5o) umfasst, und ein radial innerer Endteil (6AE) der Karkasslage (6A) zwischen den axial inneren und äußeren Kernstücken (5i, 5o) gehalten ist, ohne um den Wulstkern (5) herumgeschlagen zu sein;
ein jedes der inneren und äußeren Kernstücke (5i, 5o) aus einem Spiralwickelkörper zusammengesetzt ist, in welchem ein Wulstdraht (5a) von radial innen bis zu der Höhe über dem radial äußeren Ende eines Felgenhorns (RF) auf eine überlappende Weise in der Form einer Spirale gewickelt ist;
der Wulstdraht (5a) einen Kernteil (12), der aus nicht weniger als zwei Kernlitzen (11c) hergestellt ist, die miteinander verdreht sind, und einen Mantelteil (13), der aus nicht weniger als drei Mantellitzen (11s) hergestellt ist, die miteinander um den Kernteil (12) herum verdreht sind, umfasst, wobei der Durchmesser der Kernlitzen (11c) gleich ist wie der Durchmesser der Mantellitzen (11s),
**dadurch gekennzeichnet, dass**
die Kernlitzen (11c) und/oder Mantellitzen (11s) eine geprägte Litze (14) umfassen, die vor dem Verdrehen zu einer Wellenform geprägt worden ist; und
die Verdrehungsrichtung und Verdrehungssteigung Pc der Kernlitzen (1c1) gleich ist wie eine Verdrehungsrichtung und Verdrehungssteigung Ps der Mantellitzen (11s).

2. Verfahren zum Herstellen eines Luftreifens (1), der eine Karkasse (6) mit einer Karkasslage (6A) umfasst, die sich von einem Laufflächenabschnitt (2) durch einen Seitenwandabschnitt (3) zu einem Wulstkern (5) eines Wulstabschnitts (4) erstreckt, wobei
unter Verwendung einer starren Innenform (30), die an einer Außenfläche mit der Reifenbildungsfläche (30s) versehen ist, Bilden einer Hohlraumoberfläche des Luftreifens (1), wobei das Verfahren einen Rohreifenbildungsprozess umfasst, um eine Rohdecke (1N) zu bilden, indem nacheinander unvulkanisierte Reifenkomponentenelemente, die einen Wulstkern (5) und eine Karkasslage (6A) umfassen, auf die Reifenbildungsfläche (30S) geklebt werden;
wobei der Rohreifenbildungsprozess umfasst
einen ersten Kernstückeprozess (S1a), um ein axial inneres Kernstück (5i) auf der Reifenbildungsfläche (30s) zu bilden, indem ein Wulstdraht (5a) mit Kautschukumhüllung, der mit unvulkanisiertem Kautschuk bedeckt ist, von radial innen nach radial außen auf eine überlappende Weise in der Form einer Spirale spiralförmig gewickelt und geklebt wird,
einen Karkassenbildungsprozess (S1b), der einen Schritt eines Klebens des radial inneren Endteils (6AE) der Karkasslage (6A) auf die axiale Außenseite des axial inneren Kernstücks (5i) aufweist, und
einen zweiten Kernstückeprozess (S1c), um ein axial äußeres Kernstück (5o) auf der axialen Außenseite des radial inneren Endteils (6AE) der Karkasslage (6A) zu bilden, indem der Wulstdraht (5a) mit Kautschukumhüllung von radial innen nach radial außen auf eine überlappende Weise in der Form einer Spiral spiralförmig gewickelt und geklebt wird; und
der Wulstdraht (5a) einen Kernteil (12), der aus nicht weniger als zwei Kernlitzen (11c) hergestellt wird, die miteinander verdreht werden, und einen Mantelteil (13), der aus nicht weniger als drei Mantellitzen (11s) hergestellt wird, die miteinander um den Kernteil (12) herum verdreht werden, umfasst;
wobei die Kernlitzen (11c) und/oder Mantellitzen (11s) eine geprägte Litze (14) umfassen, die vordem Verdrehen in eine Wellenform geprägt wird; und
die Verdrehungsrichtung und Verdrehungssteigung Pc der Kernlitze (11c) gleich ist wie die Verdrehungsrichtung und die Verdrehungssteigung Ps der Mantellitzen (11s).

3. Verfahren zum Herstellen des Luftreifens nach Anspruch 2,
wobei der Wulstdraht (5a) die Mantellitzen (11s) umfasst, die nach dem Verdrehen der Kernlitzen (11c) um den Kernteil (12) gewickelt werden.

## Revendications

1. Bandage pneumatique (1) comprenant une carcasse (6) comprenant une nappe de carcasse (6A) s'étendant depuis une portion formant bande de roulement (2) en traversant une portion formant paroi latérale (3) jusqu'à une âme de talon (5) d'une portion formant talon (4), dans lequel ladite âme de talon (5) comprend des pièces d'âme axialement intérieure et axialement extérieure (5i, 5o), et une partie terminale radialement intérieure (6AE) de la nappe de carcasse (6A) est tenue entre les pièces d'âme axialement intérieure et axialement extérieure (5i, 5o) sans être retournée autour de l'âme de talon (5) ;
chacune desdites pièces d'âme intérieure et extérieure (5i, 5o) est composée d'un corps enroulé en spirale dans lequel un fil de talon (5a) est enroulé depuis l'intérieur en sens radial jusqu'à la hauteur au-dessus de l'extrémité radialement extérieure d'une bride de jante (RF) d'une manière en chevauchement sous la forme d'une spirale ;
ledit fil de talon (5a) comprend une partie d'âme (12) qui est réalisée avec pas moins de deux brins d'âme (11c) torsadés ensemble et avec une partie de gaine (13) qui est réalisée avec pas moins de trois brins de gaine (11s) torsadés ensemble autour de ladite partie d'âme (12), le diamètre des brins d'âme (11c) étant le même que le diamètre des brins de gaine (11s), **caractérisé en ce que**
lesdits brins d'âme (11c) et/ou lesdits brins de gaine (11s) incluent un brin matricé (14) qui est matricé sous une forme ondulée avant d'être torsadé ; la direction de torsade et le pas de torsade Tc desdits brins d'âme (1c) sont les mêmes que la direction de torsade et le pas de torsade Ps des brins de gaine (11s).

2. Procédé de fabrication d'un bandage pneumatique (1) comprenant une carcasse (6) comprenant une nappe de carcasse (6A) s'étendant depuis une portion formant bande de roulement (2) en traversant une portion formant paroi latérale (3) jusqu'à une âme de talon (5) d'une portion formant talon (4), dans lequel
en utilisant un moule intérieur rigide (30) doté sur une surface extérieure de la surface de formage de pneumatique (30s) formant une surface de cavité du bandage pneumatique (1), le procédé comprend un processus de formage de pneumatique cru pour former une couverture crue (1N) en faisant adhérer séquentiellement des éléments composants de pneumatique non vulcanisés incluant l'âme de talon (5) et la nappe de carcasse (6A) sur la surface de formage de pneumatique (30s) ;
le processus de formage de pneumatique cru comprend un premier processus concernant des pièces d'âme (51a) pour former une pièce d'âme axialement intérieure (5i) sur ladite surface de formage de pneumatique (30s) en enroulant en spirale et en faisant adhérer un fil de talon à doublage en caoutchouc (5a) couvert de caoutchouc non vulcanisé depuis l'intérieur en sens radial jusqu'à l'extérieur en sens radial d'une manière en chevauchement sous la forme d'une spirale,
un processus de formage de carcasse (51b) ayant une étape consistant à faire adhérer la partie terminale radialement intérieure (6AE) de la nappe de carcasse (6A) sur l'extérieur en sens axial de ladite pièce d'âme axialement intérieure (5i), et
un second processus concernant des pièces d'âme (51c) pour former une pièce d'âme axialement extérieure (5o) sur l'extérieur en sens axial de la partie terminale radialement intérieure (6AE) de ladite nappe de carcasse (6A) en enroulant en spirale et en faisant adhérer ledit fil de talon à doublage en caoutchouc (5a) depuis l'intérieur en sens radial jusqu'à l'extérieur en sens radial d'une manière en chevauchement sous la forme d'une spirale ; et
ledit fil de talon (5a) comprend une partie d'âme (12) qui est réalisée avec pas moins de deux brins d'âme (11c) torsadés ensemble et une partie formant gaine (13) qui est réalisée avec pas moins de trois brins de gaine (11s) torsadés ensemble autour de ladite partie d'âme (12) ;
lesdits brins d'âme (11c) et/ou lesdits brins de gaine (11s) incluent un brin matricé (14) qui est matricé sous une forme ondulée avant d'être torsadé ;
et
la direction de torsade et le pas de torsade Pc dudit brin d'âme (11c) sont les mêmes que la direction de torsade et le pas de torsade (Ps) des brins de gaine (11s).

3. Procédé de fabrication de bandage pneumatique selon la revendication 2, dans lequel ledit fil de talon (5a) comprend les brins de gaine (11s) enroulés autour de la partie d'âme (12) après avoir torsadé lesdits brins d'âme (11c).
